# EUROPEAN PATENT APPLICATION

(11) **EP 2 894 563 A1**
(43) Date of publication of application: **15.07.2015**
(21) Application number: 15150279.6
(22) Date of filing: 07.01.2015
(51) Int. Cl.: G06F 9/455, G06F 13/10, G06F 3/01

(54) **Method to interact with software running on a main device using a separate input device and system**

(30) Priority: 08.01.2014 EP 14150395
(71) Applicant: Teach32 BV, 3054 VG Rotterdam (NL)
(72) Inventor: van der Plas, Leendert Jan, 3054 VG Rotterdam (NL)
(74) Representative: Cramwinckel, Michiel

(57) **Abstract**

The invention is directed to a system comprising a main device, a group of two or more separate input device virtualisers and a virtual device hub. The separate input device virtualiser comprises one or more physical input devices and is adapted to convert the input generated by the one or more physical input devices to virtualised input device data. The main device is adapted to execute an application software and to translate the virtualised input device data to an input recognised by the application software. The virtual device hub is adapted to (a) let the group of separate input device virtualisers connect to the virtual device hub, (b) to receive virtualised input device data generated by the group of separate input device virtualisers and (c) to supply received virtualised input device data from a selected input device virtualiser from the group of separate input device virtualisers to the main device.

## Description

### FIELD OF INVENTION

The invention is directed to a method to interact with software running on a main device using a separate input device and system.

### BACKGROUND OF THE INVENTION

The Human interaction with applications that run on information processing system, such as computers, is called human-computer interaction (HCl). To let humans control and interact with software applications , physical input devices are used. A physical input device may be any peripheral piece of computer hardware equipment used to provide data and control signals to an information processing system such as a computer or other information appliance.

Connection between physical input devices and computer systems are in most cases based on a hardware interface, like for example USB. This hardware interface combined with the operating system determines which physical input device can be used to control the specific software application . Within the operating system running on the computer system, interpretation is done on the control signals coming from input device and actual effect within applications and user-interface. For example mouse movement send in the form of spatial data is translated into positioning info in Graphical User Interface (GUI). The operating system and it's GUI uses spatial data coming from a physical input device to let a person navigate through visual cues (visual language) presented on a display. Input through this visual language is eventually translated into instructions for the software application . On most computer systems, the use and choice of physical input devices is limited because of hardware and operating system choices made by supplier of computer systems.

The concept off virtualisation within the computer industry is rapidly growing. All physical parts of computer infrastructure are "virtualised", for example as virtual processors, virtual networks and virtual storage. Virtualisation of total computer infrastructure is now also reaching the end-user, for example the well-known Virtual Desktop Infrastructure (VDI). This virtualisation of a desktop in effect disconnects the devices used for human interaction from the actual operating system and computer processing power. Virtualisation makes it possible to run HCl environments, for example desktops operating systems like Windows, on almost all computer systems provided that the computer system has software enabling communication with a virtual infrastructure performing the actual processing. This computer system will always have a physical output and input device to facilitate the HCl to the virtual environment.

Output devices for enabling the human-computer interaction are in almost all cases some kind of display and some kind of audio device. Therefore almost all output devices used in computer systems can accommodate the above referred to virtual environment. In contrast not all computer systems can accommodate all physical input devices. This because the use of such physical input devices is limited by the hardware and the operating system of computer system used for interaction with a virtual environment. Hardware and operating system are typically combined to support a certain HCl paradigm on that device. In this paradigm input interaction is in most cases the most prominent differentiator of the computer system and typically only one or a only a few types of physical input devices are supported for that computer system. An example is a tablet computing device which supports a touch screen input as the physical input device but does not support the use of a mouse.

The lack of being able to use certain types of physical input devices makes it difficult and sometimes impossible for some computer systems to interact with software application within virtualised environments which require certain physical input device which is not supported by said computer system. In order to interact with virtualised environments which require the use of a physical input device which is not available on the computer system simulation software may be used to simulate this input device. This software translates the available physical input device in a different input device and lets the virtual environment believe that the required input device is available. This is for example described in WO-A-2011/123840, which describes a method for interacting with a remote application displayed within a virtualised desktop on a tablet computing device using a simulated mouse pointer displayed on the screen and interacting with the remote application using the displayed mouse pointer.

A disadvantage of the method of WO-A-2011/123840 is that simulated input devices are not very user friendly and is found to be less practical in use as compared to the corresponding physical input device.

US5542069 described a method for simulating input events from an input device of a computer system, under the control of a first executing program of said computer system, to a second executing program of said computer system, as if the simulated input events are real input events provided to the second executing program by the input device. The method does not deal with real input events as generated by a real user.

US2010/058341 describes a method for setting an input/output device in a virtualization system that is connected to a plurality of peripheral apparatuses. The method includes generating a plurality of virtual machines where input/output devices are not set; allocating any one of the plurality of virtual machines to a user, when the user has access; searching a plurality of peripheral apparatuses adjacent to the user in order to set an input/output device of the virtual machine allocated to the user; and setting at least one of the plurality of searched peripheral apparatuses as the input/output device of the virtual machine allocated to the user. In this method the data coming from the input device or devices is directly communicated to the virtual machine without any translation. Because the data is communicated directly only application software, like operating systems, can be used which are adapted, e.g. by drivers, for handling data coming from the input device.

The present invention aims to provide a system and method which enables a user to use the physical input device required or preferred to interact with software running on a main device while the main device itself is not equipped to directly interact with such a physical input devices.

### SUMMARY OF THE INVENTION

The invention is directed to the following system, method and a separate input device.

A system comprising a main device, a group of two or more separate input device virtualisers and a virtual device hub,
wherein the separate input device virtualiser comprises one or more physical input devices and is adapted to convert the input generated by the one or more physical input devices to virtualised input device data
wherein the main device is adapted to execute an application software and is adapted to translate the virtualised input device data to an input recognised by the application software and wherein the virtual device hub is adapted to (a) let the group of separate input device virtualisers connect to the virtual device hub, (b) to receive virtualised input device data generated by the group of separate input device virtualisers and (c) to supply received virtualised input device data from a selected input device virtualiser from the group of separate input device virtualisers to the main device.

Method to interact with application software running on a main device using a separate input device virtualiser wherein the separate input device virtualiser is part of a group of separate connected input device virtualisers all of which are connected to a virtual device hub and wherein the following steps prior are performed
(i) the main device connects to the virtual device hub and selects a separate input device virtualiser by using an unique identification of the selected separate input device virtualiser,
(ii) the selected separate input device virtualiser receives physical input device data from one or more physical input devices and converts the physical input device data to the virtualised input device data, and
(iii) the virtualised input device data interacts with the application software of the main device via the virtual device hub.

An input device virtualiser comprising sockets to connect to one or more physical input devices and a processing unit, wherein the input device virtualiser is adapted to convert user generated input of the physical input devices to virtualised device data, adapted to connect to a virtual device hub as hosted on the internet, adapted authorize connection of the input device virtualiser to the virtual device hub and adapted to supply virtualised device data to the virtual device hub once the connection is authorised.

By combining a input device virtualiser, a virtual device hub and application software using the virtualised input devices a system and method is provided which enables a user to use the physical input device required or preferred to interact with software running on a main device while the main device itself is not equipped to interact with such a physical input devices. The system and method thus enables interaction and control with input devices on the so-called application level instead of the operating system level by using a virtual input. This is advantageous especially when input devices are not supported or available on the so-called operating system or driver level. For example, the invention provides a system and method enabling a user to use a mouse input device which is preferred to interact with a Remote Desktop application running on a tablet and wherein the tablet is not equipped to interact with a mouse input device because of software and hardware restrictions on the operating system and/or driver level. More advantages and preferred embodiments will be described below.

### BRIEF DESCRIPTION OF THE FIGURES

Figure 1 shows a system according to the invention
Figure 2 shows another system according to the invention
Figure 3 shows the process of setting up a connection
Figure 4 shows hardware setup of a separate Input Device Virtualiser
Figure 5 shows the functions of a Input Device Virtualiser
Figure 6 shows the functions of a Virtual Device Receiver
Figure 7 shows an example of a separate IDV in combination with a tablet.
Figure 8 shows a comparison between the system of the invention and the prior art.

### DETAILED DESCRIPTION OF THE INVENTION

Throughout the description the following abbreviations and their full description will be used interchangeably.
DH: Device Hypervisor
GUID: unique identification
GUI: Graphical User Interface
HCl: human computer interaction
IDV: input device virtualiser
NAT: network address translation
OS: operating system
RDC: remote desktop client
TCP: transmission control protocol
UDP: user datagram protocol
VDP protocol: virtual device protocol
VDH: virtual device hub
VDR: virtual device receiver
VNC: virtual network computing
WebRTC: web real time communication

The system and method according the invention comprises or make use of a main device, a separate input device virtualiser (IDV) and a virtual device hub (VDH).

The main device is defined to be any computer device, which comprises application software suited to run on said main device. The main device may be provided with physical input devices and physical output devices. In order to take optimal advantage of the present invention it is preferred that these physical input devices are not the type of input device optimally required by the human computer interaction (HCl) of the application software running on the main device. Examples of such main devices are desktop computers, laptop computers, smart phones and tablets. For example application software may be installed on a tablet which optimally requires a physical mouse as the input device while the tablet itself is not provided with means to directly communicate with a physical mouse. Suitably such application software may be a text editor, graphical design software or a web browser.

The main device may suitably be adapted to execute a remote desktop software as the application software. The remote desktop software, to present a virtual desktop, may for example be VNC, Microsoft Remote Desktop and Citrix Receiver. The main device on which such remote desktop software is provided will function as a remote desktop client (RDC). The remote desktop client will be in communication with a computer provided with software to run the corresponding desktop operating system.

The main device may also be a computer device, which is separate from a physical output device used in the HCl. Suitably the main device may be a computer, for example desktop or server, provided with means adapted to execute a desktop operating system resulting in a main device desktop as the application software. The system suitably further comprises a separate physical output device for the HCl in relation with the application software running on the main device. The separate output device is adapted to execute a remote desktop software for presenting the main device desktop as a virtual desktop on the separate physical output device. Such a separate output device will be referred to as the remote desktop client (RDC) and may be desktop, laptop, a tablet or smart phone and the output on these RDC is presented as a virtualised output of the software running on the main device.

To take optimal advantage of the present invention the RDC in the above embodiments is preferably not equipped or may be equipped with physical input devices, which are optimally required by the human computer interaction (HCl) of the application software running the desktop OS. For example the software running the desktop OS may use spatial data to let a person navigate through visual cues (visual language) presented on a display of the RDC. Optimally a physical input device is used which generates pointer output, for example a mouse. However when the RDC is for example a tablet or smart phone or hybrids thereof, such physical input device(s) which are preferably used in the HCl is/are not provided or can be provided with such a physical input device. By using the present system and method it becomes possible to use such physical input devices in combination with such a RDC.

By virtualised input device data is meant any input data generated by a physical input device wherein the physical input device data is converted to virtualised input device data which is send via a computer network to the main device via a virtual device hub which is part of said computer network.

The input device virtualiser (IDV) is a device which comprises one or more physical input devices and is adapted to convert the input data generated by the one or more physical input devices by a user to virtualised input device data. The input device virtualiser will thus comprise means adapted to execute software to convert the input data generated by the one or more physical input devices to virtualised input device data. Such software which creates a virtual version of the input device is referred to as hypervisor software.

Preferably the separate input device virtualiser is adapted to convert the input generated by the one or more physical input devices to a generalized virtualised input device data. The IDV may therefore comprise means adapted to execute Device Hypervisor software (DH software) for converting the input data generated by the one or more physical input devices to generalized virtualised input device data. This software is able to standardise virtualised input device data formats of different types of physical devices by converting these data formats to a limited number of virtualised input device data types. The physical input device may be a symbolic input device which generate symbolic data, for example a keyboard, a bar code scanner or control-buttons or any combination of these input devices. The Device Hypervisor software may comprise a first class of software for converting the input data generated by these symbolic input devices to generalized virtual symbolic input device data.

The physical input device used may also be a pointer-motion input device. A pointing device may be any human interface device that allows a user to input spatial data, optionally combined with pressure data, to a computer. Examples are a mouse, joystick, touchpad, touchscreen or pen tablet devices. The Device Hypervisor software may comprise a second class of software for converting the input data generated by the one or more physical pointer input devices to a generalized virtual pointing device data. For example this class may has an interface based on W3C Pointer Events interface as for example described in http://www.w3.org/TR/pointerevents/.

The main device is adapted to translate the virtualised input device data to an input recognised by the application software. Suitably the software running on the main device comprises a software component which is suited to translate the virtualised input device data into input recognised by the software running on the main device. As a result of this conversion the virtualised input device is seen by the main device as a physical input device. The software component which enables this conversion is called virtual device receiver (VDR). This VDR software may suitably also enable the connection between the main device and the virtual device hub. Preferably the VDR software component can exist in three different forms.
1) As a separate application which can be used to simulate input data given by virtual input devices as being given by native input devices. By native input device is here meant any physical input device which is typically used in combination with the software running on the main device.
2) As a device driver embedded in the core operating system of the main device which can be used to inject input data given by virtual input device within the core operating system as if it was coming from real physical input device.
3) A software module for example a library or an object which can be integrated in a specific application, letting this specific application listen to input data coming from virtual input devices.

The virtual device hub (VDH) is provided with software suited to let the group of separate input device virtualisers connect to the virtual device hub, software to receive virtualised input device data generated by the group of input device virtualisers and software to supply received virtualised input device data from a selected input device virtualiser from the group of separate input device virtualisers to the virtual device receiver software running on the main device. Suitably the software running on the VDH is suited to serve virtualised input from a selected input device virtualiser from the group of connected input device virtualisers on request of the VDR software running on the main device.

Both main device and the two or more input device virtualisers suitably initiate connection to the VDH. In this manner the total system avoids all kinds of firewalls or NAT issues when setting up communication between the IDV and the VDR software on the main device. Preferably the virtual device hub is further adapted to select a input device virtualiser from the group of connected separate input device virtualisers by using a unique identification information of the selected input device virtualiser. The virtual device hub may comprise means adapted to execute software suited to select a input device virtualiser from the group of connected separate input device virtualisers by using a unique identification information of the selected input device virtualiser. In use a user selects one or more available input device virtualiser through the VDR software in order to start using the system. This results in that only virtualised input device data as generated by a user selected virtualised input devices will communicate with the main device and avoids unauthorised control through input devices of software running on the main device.

Preferably the virtual device hub (VDH) is hosted on the internet. The virtual device hub is thus adapted to communicate with the main device and with the input device virtualiser via the internet. Furthermore it is preferred that a socket protocol like TCP or UDP is used in combination with Websocket or WebRTC as communication between the VDR software running on the main device, the virtual device hub (VDH) and the input device virtualiser (IDV). The internal syntax of the protocol will be referred to as the VDP protocol or virtual device protocol. Using Websocket or WebRTC makes system more transparent for firewall configurations on the side main device and IDV device. Using these specific protocols also makes it possible to directly control HTML5 based software with virtualised input device data within a web browser running on the main device.

The invention is also directed to a method to interact with software running on a main device using a separate input device virtualiser as described above. This method suitably uses the system according to the invention as described herein and any methods described in combination with the system also apply to this method.

Suitably the separate input device virtualiser is part of a group of separate input device virtualisers all connected to the virtual device hub. The group of virtual input device virtualisers will prior to performing step (i) connect to the virtual device hub. The IDV suitably identifies itself to the virtual device hub via its unique identification (GUID) and subsequently becomes registered by the virtual device hub. The IDV may receive after registration additional control information and updates from the VDH. The connection of the separate input device virtualisers to the VDH is suitably performed automatically when the IDV is started up.

In step (i)) the main device connects to the virtual device hub and selects a separate input device virtualiser by using an unique identification of the selected separate input device virtualiser. With unique identification of a IDV may also be meant the unique identification of the physical input devices of the IDV. Suitably the virtual device hub will supply a list of available physical input devices belonging to one or more input device virtualisers from which the user may choose one or more physical input devices from the one or more input device virtualisers. The user will provide the GUID to the main device, using the input means available to the user to interact with the main device, to initiate the connection with the virtual input device data from selected input device virtualiser. Because communication with the VDH and connection to the virtual input device data is initiated by the VDR software as present on the main device, unauthorised use is not possible by external initiation.

Suitably in step (i) the virtual device hub is suitably hosted on the internet. This enables everyone who has an internet connection to use the method. As described above the physical input may comprise spatial, pressure and/or symbolic data. In step (ii) the input generated by the one or more physical input devices which generate symbolic data is converted to a generalized virtual symbolic input and the input generated by the one or more physical input devices which generate spatial data optionally combined with pressure data is converted to a generalized virtual pointer input. For such data it is preferred that the conversion of the physical input device to a virtualised input device in step (ii) is performed by software comprising Device Hypervisor software (DH software), wherein the Device Hypervisor software has two classes for virtual input devices, a virtual pointing device class and a virtual symbolic device class, wherein the virtual pointing device class is used to convert and embody all data coming from different types of physical input devices generating spatial and/or pressure data within one generalized virtual pointer input device data and wherein virtual pointing device class is an interface based on W3C Pointer Events interface as referred to above. The Device Hypervisor software uses the virtual symbolic input device class to convert and embody all symbolic data from different types of physical symbolic input devices within one generalized virtual symbolic input device.

In step (iii) the virtualised input device data is translated to an input recognised by the application software running on the main device. Suitably the software running on the main device to perform the connection in step (i) and to perform the translation in step (iii) is part of the same software component running on the main device and also referred to as the virtual device receiver software as also described above. Thus ssuitably the VDR software component running on the main device receives virtual input device data from one or more selected virtual input devices via the VDH and will convert this virtual input device data to input data which is recognized by the application software running on main device.

The method is especially directed to a method wherein the main device is adapted to execute a desktop operating system resulting in a main desktop and wherein a separate physical output device is used whicg output device is adapted to execute a remote desktop software for presenting the main device desktop as a virtual desktop on the separate physical output device. Alternatively the main device is adapted to execute a remote desktop software as the application software.

As mentioned above the VDH is preferably hosted on the internet and all IDV devices are connected to VDH through an unique identification number. The VDH can consist of an array of one or more physical computer systems (nodes) interconnected through a network. This distributed architecture can be used to minimize latency time between IDV, VDH and VDR software and VDH nodes can be placed in specific internet exchange locations. Preferably the data communicated via the internet in steps (i) and/or (iii) are encrypted to avoid unauthorised listening in.

The invention is also directed to an input device virtualiser comprising sockets to connect to one or more physical input devices and a processing unit, wherein the input device virtualiser is adapted to convert user generated input of the physical input devices to virtualised device data, adapted to connect to a virtual device hub as hosted on the internet, adapted to authorize connection of the input device virtualiser to the virtual device hub and adapted to supply virtualised device data to the virtual device hub once the connection is authorised. The IDV may comprise a socket to connect to a network, preferably the Internet or be provided with means to wireless connect to a network, preferably to the Internet. This input device virtualiser is suitably part of the system according to the invention and/or used in the method according to the invention and in that context also referred to as separate IDV. The description of the IDV in the system and method above also apply to the claimed separate IDV.

Preferably the separate IDV further comprises a holder for an output device. Preferably the output device is a remote desktop client (RDC) as described above. Suitably the holder for the output device is a holder for a tablet and wherein the sockets are suited to connect to at least one or more physical input devices, for example a mouse, a keyboard, a pen tablet or a touchpad. The separate IDV may optionally be provided with power sockets for the output device. The sockets and/or power sockets may be provided by so-called USB ports. The IDV may further have a power cable to connect to the electrical grid and/or be provided with batteries and a network connection wired and/or wireless to connect to network/internet.

The separate input device, method and system will be further described in the following Figures.

### DETAILED DESCRIPTION OF THE FIGURES

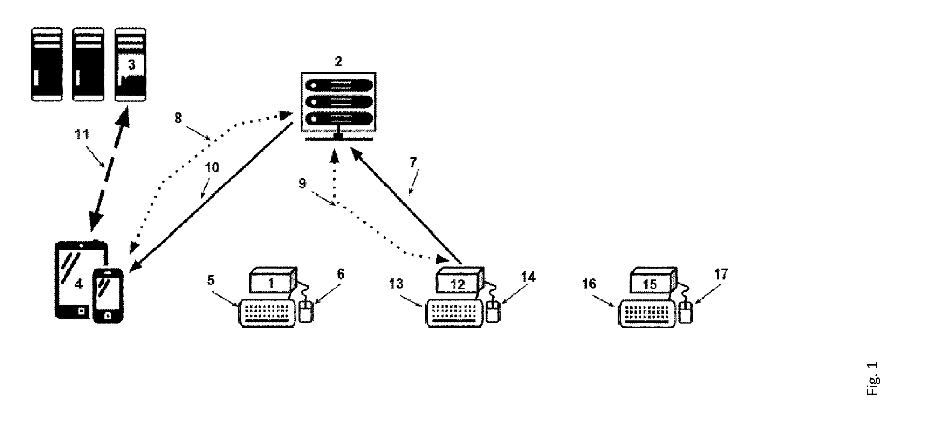

Figure 1 illustrates a possible embodiment of the above-described system according to the invention. Figure 1 shows a input device virtualiser 1, input device virtualiser 12 and input device virtualiser 15 illustrating a group of separate input device virtualisers. Also shown is a virtual device hub 2, a main device 4 provided with a screen as the output device which may be a tablet or smart phone as illustrated. The main device 4 is running remote desktop client (RDC) software in communication with a remote desktop server 3 via input and output connection 11. The remote desktop server can be a desktop PC running a desktop operating system or a virtual desktop sever running multiple virtual sessions of a desktop operating system.

The input device virtualiser 1 is connected to a keyboard 5 and a mouse 6 as the physical symbolic and pointer input devices. The input device virtualiser 12 is connected to a keyboard 13 and a mouse 14 as the physical symbolic and pointer input devices. The input device virtualiser 15 is connected to a keyboard 16 and a mouse 17 as the physical symbolic and pointer input devices.

The tablet or smartphone being main device 4 is provided with VDR software to connect to and receive virtualised input device data from a virtual device hub 2 which is hosted on the internet. According to one use of the system a user of main device 4 will select one or more of the virtualised input devices of the available input device virtualisers as present at the location of the user. The user will use the available input means of the main device to, for example, enter the GUID of the chosen input device virtualiser. In this example the user has chosen input device virtualiser 12. It can be imagined that numerous input device virtualisers are available at different public locations such as airports, libraries and other public spaces. By connecting to the input device virtualiser 12 available at the user's location the user can subsequently provide input via the keyboard 13 and mouse 14 to interact with the desktop software running on remote desktop server 3 through RDC software running on main device 4.

The virtual device hub 2 and the desktop server 3 are typically not located near input device virtualiser 1.

Input device virtualiser 12 is provided with software to convert the physical input generated by keyboard 13 and mouse 14 to virtualised input device data. The virtualised input device data is supplied via data connection 7 to the virtual device hub 2 and via connection 10 from VDH to main device 4. The VDR software running on main device 4 converts the virtualised input device data such that the remote desktop software running on main device 4 sees this input as if it was generated by a required local physical input device, i.e. a mouse and keyboard.

When input device virtualiser 12 is switched on and connected to network it will automatically set up a connection with the virtual device hub 2 via a control request connection 9. Once the connection between input device virtualiser 12 and virtual device hub 2 is established the physical input devices 13 and 14 are selectable as virtual devices on the VDH. When a user wants to set up a connection between his or her tablet, being the main device 4, and the input device virtualiser 1 he or she first connects with the virtual device hub 2, preferably using the VDR software running on the main device 4. When the connection via control request connection 8 is established the user can enter the unique identification of the input device virtualiser 12, which is already connected to the VDH 2. The virtual device hub 2 will then supply a list of available physical input devices 13 and 14 to the VDR software using control request connection 8. User selects device 13 and/or 14 and the VDH 2 will start supplying virtual input device data to VDR software through data connection 10. With received virtual input device data coming indirectly from device 13 and/or 14 the VDR software will supply simulated device data to RDC software running on main device 4. Main device 4 will act as RDC for virtual input and output of desktop OS running on remote desktop server 3 using input and output connection 11.

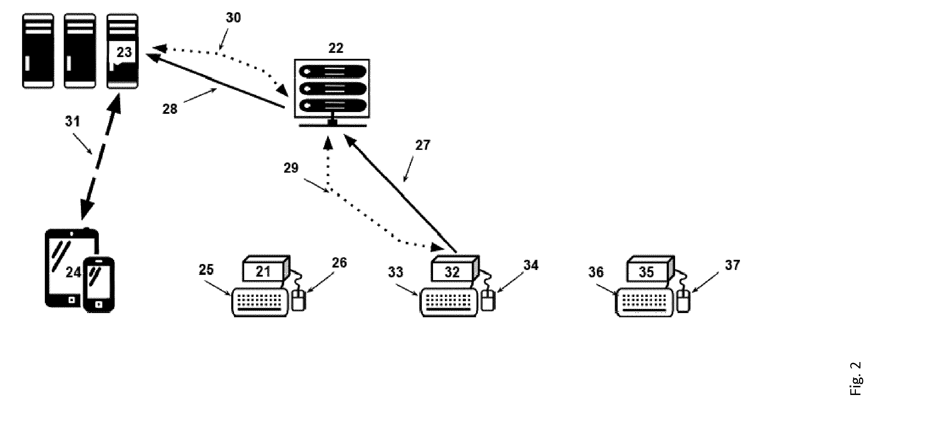

Figure 2 shows a system similar to the system of Figure 1. Figure 2 shows a input device virtualiser 21, input device virtualiser 32, input device virtualiser 35 illustrating a group of separate input device virtualisers. Also shown is a virtual device hub 22, a main device 23 and an output device 24. The input device virtualiser 21 is connected to a keyboard 25 and a mouse 26 as the physical symbolic and pointer input devices. The input device virtualiser 32 is connected to a keyboard 33 and a mouse 34 as the physical symbolic and pointer input devices. The input device virtualiser 35 is connected to a keyboard 36 and a mouse 37 as the physical symbolic and pointer input devices.

In contrast to Figure 1 the remote desktop server device 23 is the main device, instead of RDC device 24. Device 24 is provided with a screen as the output device which may be a tablet or smart phone as illustrated and is running remote desktop client (RDC) software in communication with remote desktop server 23 via input and output connection 31. The main device 23 is provided with VDR software to connect to and receive virtualised input from a virtual device hub 22 which is hosted on the internet.

When Input Device Virtualiser 32 is switched on and connected to network it will automatically set up a connection with the virtual device hub 22 via a control request connection 29. Once the connection between input device virtualiser 32 and virtual device hub 22 is established the physical input devices 33 and 34 are selectable as virtual devices on the VDH.
The virtualised input device data is supplied from the input device virtualiser 32 via data connection 27 to the virtual device hub 22. And virtualised input device data from VDH is supplied to the main device 23 via connection 28.

When a user wants to set up a connection between the main device 23, running desktop OS, and the devices on the input device virtualiser 32 he or she first uses the remote desktop client software on his or her tablet 24 to connect with remote desktop server through connection 31. VDR software running on the main device 23 is used to connect with the virtual device hub 22 using control request connection 30. After connection is established the user will use the available input means of the RDC device 24 to enter the GUID of the chosen input device virtualiser 32 into VDR software running on main through RDC input output connection 31. The virtual device hub 22 will then know it must supply a list of available physical input device 33 and 34 to the VDR software running on the main device 23, through connection 30. User selects input device 33 and/or 34, and VDH will start supplying virtual input device data to VDR software through data connection 28. With received virtual input device data coming indirectly from device 33 and/or 34, the VDR software will start controlling remote desktop OS on the main device 23, with simulated devices 33 and/or 34. Remote desktop client 24 will now present virtual output of the desktop OS running on the main device 23 through data connection 31 on the RDC device 24.

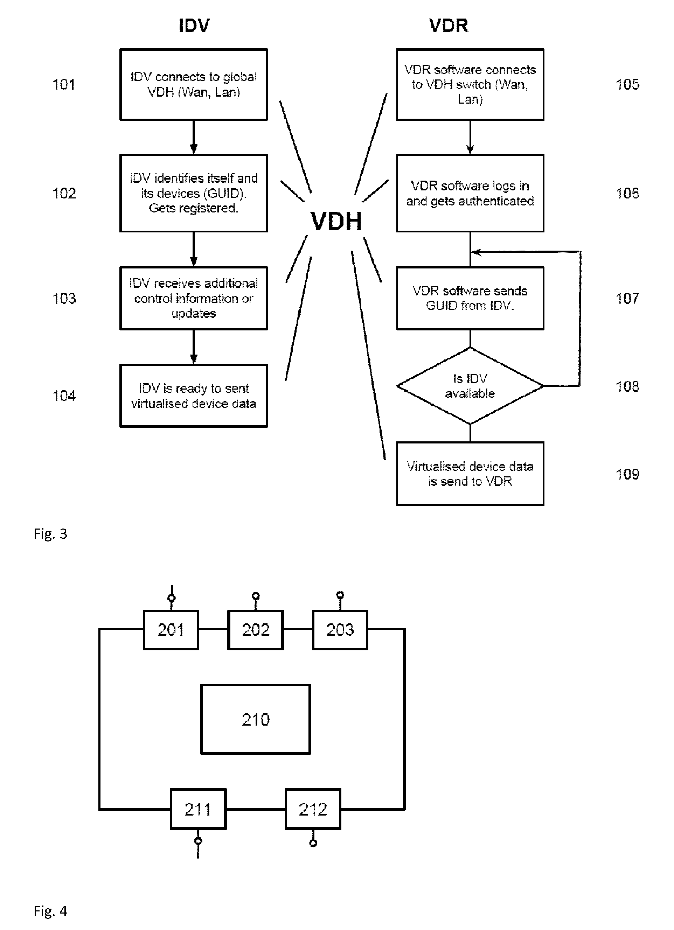

Figure 3 illustrates the process of setting up the connection of IDV and VDR software with virtual device hub. The VDH, preferable running on the internet, is always active and therefor always available for IDV and VDR software to connect. Connection of IDV to VDH is done automatically after start-up of IDV, connection of VDR software with the VDH is initiated by user.

Figure 3 shows the start-up protocol of the IDV. The IDV connects in step 101 to the VDH via for example a Wan or Lan. The IDV identifies itself in step 102 via its unique identification (GUID) and gets registered. The IDV may receive in step 103 additional control information and updates from the IDS. The IDV is now ready to send virtualised input data to the VDH in step 104.

Figure 3 also shows connection process of VDR software to VDH. VDR software is controlled by a person, using main device, who wants to control software through physical input devices connected to the IDV. In a first step 105 the VDR software connects to the VDH which is hosted on the internet via for example a Wan or Lan. The VDR software identifies itself in step 106 by means of for example a username and password which are input by user. When authenticated VDR software communicates in step 106 the unique identification (GUID) of the IDV to which connection is desired to the VDH. The VDH will check in step 107 if the IDV is available , i.e. connected, and if available connect in step 108. Also available physical devices on selected IDV are sent to VDR software in step 108. After selecting the physical devices which user wants to use, VDH will start sending virtual input device data of selected devices to the VDR software in step 109.

Figure 4 shows a schematic presentation of a possible hardware configuration of a input device virtualiser having a processing unit 210. For communication with the virtual device hub the input device virtualiser is provided with one or more wired Lan connection 201, Wireless Lan, for example 802,11x, connection 202, Wan, for example 3G, 4G and/or satellite, connection 203. Further one or more connectors, suitably USB 2 connectors, port 211 is provided for connecting to the one or more physical input devices. Further a Pan (personal area network) device 212, for example bluetooth, is provided for wireless connection to the one or more physical input devices.

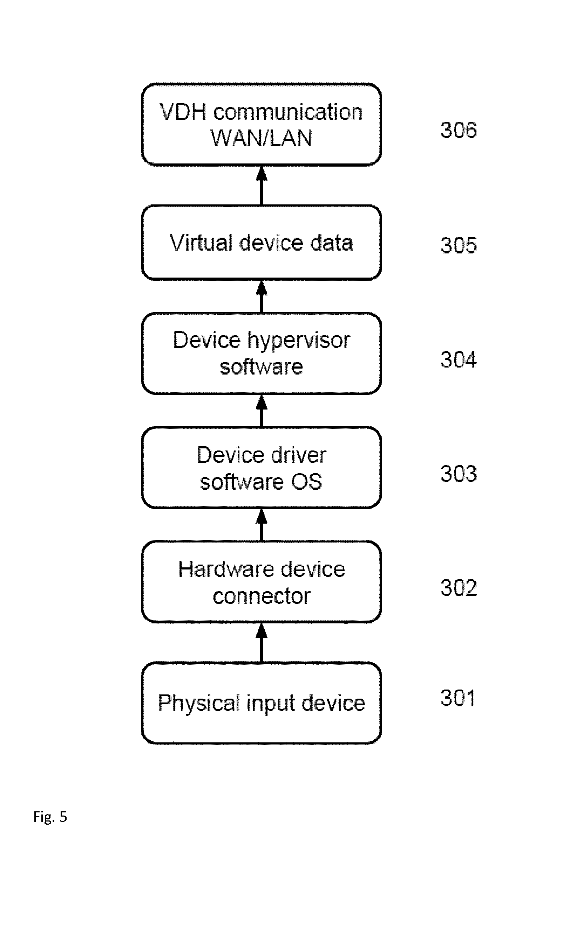

Figure 5 shows the different hardware and software parts which a suitable input device virtualiser may be provided with: physical input device 301 provides input signals to a hardware device connector, for example USB connector, 302, device driver software within operating system converts hardware signals to input device data 303, input device data is communicated to the described Input Device Hypervisor software 304 which converts input device data to generalized virtual input device data 305 and finally virtual input device data is communicated with the virtual device hub through a socket based protocol running over Lan or Wan

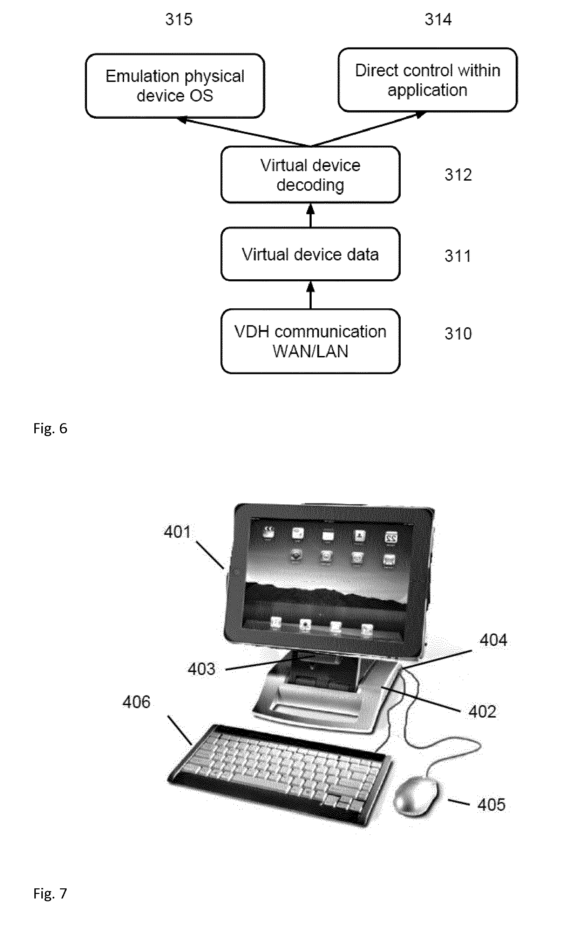

Figure 6 shows the functions of a Virtual Device Receiver as part of the main device: communication with the VDH via a WAN/LAN 310 to receive virtual device data 311, which is subsequently translated to input data which is recognised by the software. This may be performed by a virtual device decoding step 312 and emulation 315 into a physical input device suited for the operating system (OS) of the main device or by a virtual device decoding step 312 and direct use 314 within an application running on the main device.

Figure 7 shows an example of such a separate input device virtualiser 402 provided with two USB ports 404 to connect a keyboard 406 and a mouse 405 to said input device 402. A holder 406 is provided to hold a tablet 401 which can be used to run remote desktop client software.

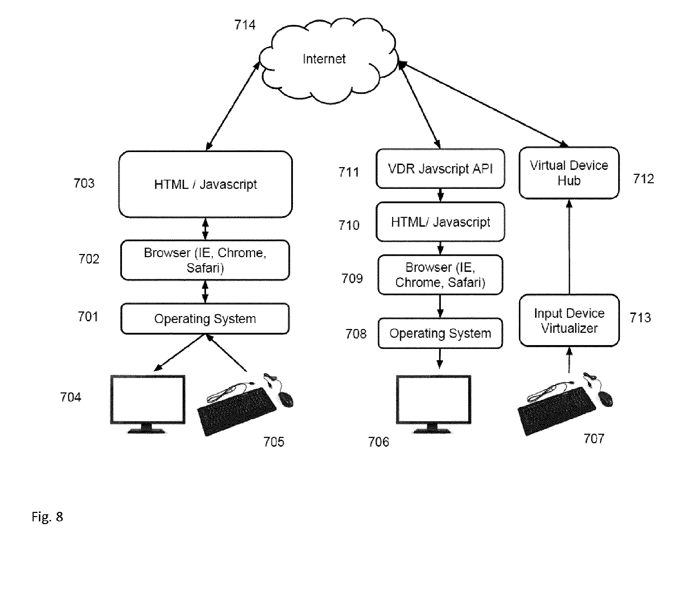

Figure 8 is a further illustration how the system according to the present invention differs from current know system setup when running direct input device control within a web-browser using HTML5 and JavaScript. In the current system setup an output screen 704 and physical input devices like keyboard/mouse 705 will communicate via an operating system 701 as present on a local device with a browser 702. This browser in turn interacts with the HTML5 and JavaScript code 703 coming from internet 714. The type of devices that can be used within current system setup is limited to input device accepted by operating system running on system.

In the system according to the invention the physical input devices like keyboard/mouse 707 will communicate via the virtual device hub (shown as a cloud device server 712) and via the internet 714 to the VDR JavaScript component running within browser software 709. Output created by HTML5 code, JavaScript, and input control from VDR component running within browser software 709 will be sent to operating system 708 which present output on screen 706. In this system the operating system 708 on the local device does not need to support the physical input devices 707. This enables one for example to use a tablet computer as the local device for web-browser and keyboard and/or mouse as the physical input devices.

## Claims

1. A system comprising a main device, a group of two or more separate input device virtualisers and a virtual device hub,
wherein the separate input device virtualiser comprises one or more physical input devices and is adapted to convert the input generated by the one or more physical input devices to virtualised input device data
wherein the main device is adapted to execute an application software and is adapted to translate the virtualised input device data to an input recognised by the application software and
wherein the virtual device hub is adapted to (a) let the group of separate input device virtualisers connect to the virtual device hub, (b) to receive virtualised input device data generated by the group of separate input device virtualisers and (c) to supply received virtualised input device data from a selected input device virtualiser from the group of separate input device virtualisers to the main device.

2. System according to claim 1, wherein the virtual device hub is further adapted to select an input device virtualiser from the group of connected separate input device virtualisers by using an unique identification information of the selected input device virtualiser.

3. System according to any one of claims 1-2, wherein the virtual device hub is hosted on the internet and wherein the virtual device hub is adapted to communicate with the main device and with the input device virtualiser via the internet.

4. System according to any one of claims 1-3, wherein the separate input device virtualiser is adapted to convert the input generated by the one or more physical input devices to a generalized virtualised input device data.

5. System according to claim 4, wherein the separate input device virtualiser is adapted to convert the input generated by the one or more physical input devices which generate symbolic data to a generalized virtual symbolic input device data and/or wherein the separate input device virtualiser is adapted to convert the input generated by the one or more physical input devices which generate spatial data optionally combined with pressure data to a generalized virtual pointer input data.

6. System according to any one of claims 1-5, wherein the main device is a computer provided with means adapted to execute a desktop operating system resulting in a main device desktop and wherein the system further comprises a separate physical output device which separate output device is adapted to execute a remote desktop software for presenting the main device desktop as a virtual desktop on the separate physical output device.

7. System according to any one of claims 1-5, wherein the main device is adapted to execute a remote desktop software as the application software.

8. Method to interact with application software running on a main device using a separate input device virtualiser wherein the separate input device virtualiser is part of a group of separate connected input device virtualisers all of which are connected to a virtual device hub and wherein the following steps prior are performed
(i) the main device connects to the virtual device hub and selects a separate input device virtualiser by using an unique identification of the selected separate input device virtualiser,
(ii) the selected separate input device virtualiser receives physical input device data from one or more physical input devices and converts the physical input device data to the virtualised input device data, and
(iii) the virtualised input device data interacts with the application software of the main device via the virtual device hub.

9. Method according to claim 7, wherein in step (iii) the virtualised input device data is translated to an input recognised by the application software.

10. Method according to claim 9, wherein the software running on the main device to perform the connection in step (i) and to perform the translation in step (iii) is part of the same software component running on the main device and also referred to as the virtual device receiver software.

11. Method according to any one of claims 8-10, wherein the group of separate connected device input virtualisers are obtained by a process wherein the individual device input virtualisers connect to the virtual device hub by identifying itself to the virtual device hub via its unique identification to become registered by the virtual device hub as the group of separate connected input device virtualisers.

12. Method according to any one of claims 8-11, wherein the virtual device hub is hosted on the internet.

13. Method according to any one of claims 8-12, wherein the physical input device data comprises spatial data optionally combined with pressure data and/or the physical input device data comprises symbolic data and wherein the input generated by the one or more physical input devices which generate symbolic data is converted to a generalized virtual symbolic input in step (ii) and/or the input generated by the one or more physical input devices which generate spatial data optionally combined with pressure data is converted to a generalized virtual pointer input in step (ii).

14. Method according to any one of claims 8-13, wherein the main device is a computer provided with application software to run a desktop operating system and wherein on a separate physical output device this desktop may be presented as a virtual desktop by remote desktop software provided on device or wherein the main device is provided with remote desktop software as the application software.

15. An input device virtualiser comprising sockets to connect to one or more physical input devices and a processing unit, wherein the input device virtualiser is adapted to convert user generated input of the physical input devices to virtualised device data, adapted to connect to a virtual device hub as hosted on the internet, adapted to authorize connection of the input device virtualiser to the virtual device hub and adapted to supply virtualised device data to the virtual device hub once the connection is authorised.
